**Europäisches Patentamt**

**European Patent Office**

**Office européen des brevets**

(19)

(11) Veröffentlichungsnummer: **0 495 422 A2**

## (12) EUROPÄISCHE PATENTANMELDUNG

(21) Anmeldenummer: **92100424.8**

(22) Anmeldetag: **13.01.92**

(51) Int. Cl.⁵: **B60R 16/02**

(30) Priorität: **14.01.91 AT 58/91**

(43) Veröffentlichungstag der Anmeldung:
**22.07.92 Patentblatt 92/30**

(84) Benannte Vertragsstaaten:
**AT BE CH DE DK ES FR GB GR IT LI LU MC NL PT SE**

(71) Anmelder: **Siemens Aktiengesellschaft Österreich**
**Siemensstrasse 88 - 92**
**A-1210 Wien(AT)**

(84) **AT**

(71) Anmelder: **Siemens Aktiengesellschaft**
**Postfach 22 16 34**
**W-8000 München 2(DE)**

(84) **BE CH DE DK ES FR GB GR IT LI LU MC NL PT SE**

(72) Erfinder: **Göstl, Norbert, Dipl.-Ing.**
**Peter Jordanstr. 101**
**A-1180 Wien(AT)**
Erfinder: **Weirich, Friedrich**
**Grosse Mohrengasse 35**
**A-1020 Wien(AT)**
Erfinder: **Glehr, Manfred, Dipl.-Ing.**
**Gartenweg 8**
**W-8330 Eggenfelden(DE)**

(54) **Schaltkreisanordnung für Bordnetze von Fahrzeugen.**

(57) Anordnung von Schaltkreisen für Bordnetze von Fahrzeugen, mit mehreren Teilstromkreisen, von denen jeder über den Kontakt je eines zugeordneten Relais unmittelbar an eine von der Fahrzeugbatterie gespeiste Stromschiene anschließbar ist. Jedem Teilstromkreis ist ein das betreffende Relais samt Beschaltung enthaltendes, als mit Steckverbindungen (3) versehenes Modul (1) ausgebildetes Gehäuse zugeordnet. Für alle Module (1) ist eine als Haltevorrichtung dienende Steckplatte (2) vorgesehen, die die der Informationsübertragung zwischen den einzelnen Modulen (1) dienenden Querverbindungsleitungen enthält.

FIG. 1

EP 0 495 422 A2

Die Erfindung betrifft eine Anordnung von Schaltkreisen mit zugehörigen Gehäusen für Bordnetze von Fahrzeugen, insbesondere Kraftfahrzeugen, mit mehreren Teilstromkreisen.

Üblicherweise befindet sich in Kraftfahrzeugen, meist in einem abgeschlossenen Bereich im Motorraum, eine Einheit mit einer größeren Anzahl von Steckplätzen für diverse kleine Relais- bzw. Elektronikeinheiten, sowie für die zur Absicherung der verschiedenen Stromkreise erforderlichen Sicherungselemente. Diese als "Zentralelektrik" bezeichnete Einheit bildet auch einen zentralen Knotenpunkt für eine Vielzahl von Kabelsträngen.

Die Anordnung dieser bekannten Einheiten ist so getroffen, daß die von der Batterie abgenommene elektrische Leistung über Sicherungen und über diverse Relais zu den verschiedenen Kabelsträngen verteilt wird. Weiters müssen die Signalströme von diversen Gebern und Elektronikeinheiten zur Weiterverarbeitung auf verschiedene Kabelstränge aufgeteilt werden. Die Relais- bzw. Elektronikeinheiten beinhalten u.a. Zeitsteuerungen und diverse logische Verknüpfungen zur Ansteuerung der angeschlossenen Verbraucher. In der Zentralelektrik sind alle erforderlichen Sicherungselemente für die angeschlossenen Verbraucher untergebracht. Im Zuge der ständig steigenden Anzahl von elektrischen Verbrauchern und Komponenten im Kraftfahrzeug kommen auf die Zentralelektrik noch weitere zentrale Aufgaben zu, wie z.B. die Diagnose über den jeweiligen Zustand der diversen Verbraucher.

In den bekannten Zentralelektrik-Ausführungen wurden die Verbindungen zu den einzelnen Steckerkontakten, Relais- bzw. Elektronikeinheiten und Sicherungshaltern in Stanzgittertechnik ausgeführt, d.h. mittels Stanzbiegeteilen hergestellt. Um die Vielzahl der Verbindungen herstellen zu können, müssen die Metallstreifen in bis zu zwölf Lagen angeordnet werden, wobei die Isolierung durch entsprechend geformte Kunststoffzwischenlagen erfolgt. Die verwendeten Relais mit der zugehörigen Elektronik sind dabei in einzelnen kleinen Gehäusen untergebracht und werden über Steckkontakte mit den Stanzteilen verbunden. Dadurch ergeben sich relativ viele Steckkontakte und sehr lange Verbindungsleitungen, was zu hoher Eigenerwärmung der Einheit führt. Besonders nachteilig ist bei dieser Ausführung die geringe Flexibilität, denn bei Änderungen müssen jeweils mehrere mechanische Teile verändert werden, was sehr hohe Werkzeugänderungskosten verursacht.

Die Erfindung hat sich daher die Aufgabe gestellt, diese Nachteile der bekannten Technik zu überwinden und erzielt dies bei Bordnetzen mit mehreren Teilstromkreisen dadurch, daß jeder Teilstromkreis über den Kontakt je eines zugeordneten Relais unmittelbar an eine von der Fahrzeugbatterie gespeiste Stromschiene anschließbar ist und daß weiters jedem Teilstromkreis ein das betreffende Relais samt Beschaltung enthaltendes, als mit Steckverbindungen versehenes Modul ausgebildetes Gehäuse zugeordnet ist und daß schließlich für alle Module eine als Haltevorrichtung dienende Steckplatte vorgesehen ist, die die der Informationsübertragung zwischen den einzelnen Modulen dienenden Querverbindungsleitungen enthält.

Bei der Erfindung wird eine konsequente Trennung von Leistungsübertragung und Signalübertragung erzielt und dadurch vermieden, daß hohe Ströme über mehrere Kontakte oder über lange Leitungen geführt werden müssen, wobei logische Verknüpfungen nur auf der Signalebene realisiert werden.

Ein Ausführungsbeispiel der Erfindung ist in der Zeichnung dargestellt.

Fig. 1 zeigt den Gesamtaufbau des Gehäuses für das Bordnetzwerk eines Fahrzeuges mit fünf Modulen. Ein einzelnes Modul ist in

Fig. 2 in Ansicht von der Breitseite, in

Fig. 3 von oben und in

Fig. 4 in Ansicht von der Schmalseite dargestellt.

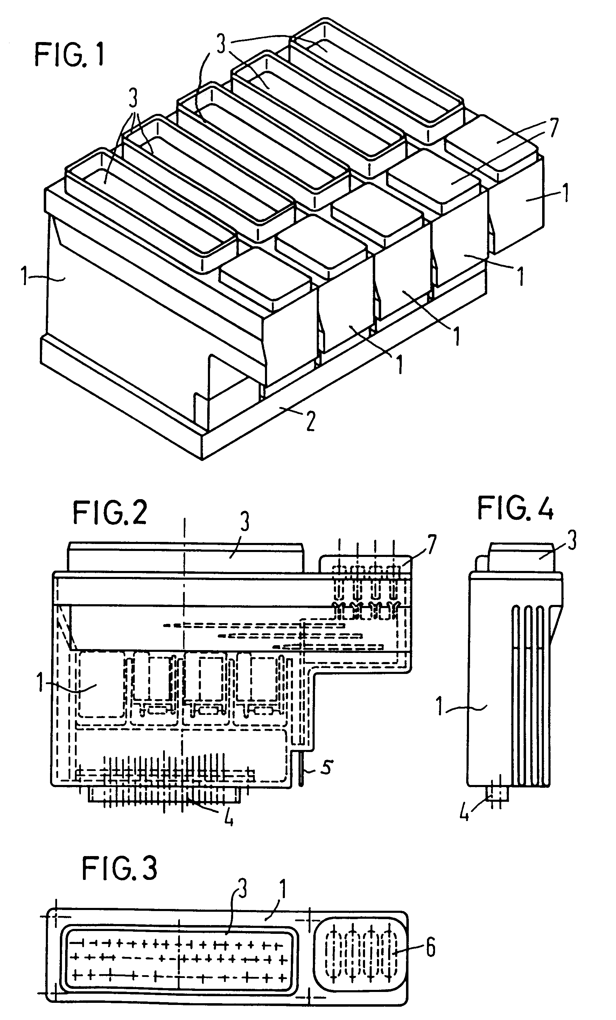

Die unterschiedslos mit 1 bezeichneten Module sind nebeneinander auf einer gemeinsamen Steckplatte 2 aufgesteckt. Jedes der Module 1 ist individuell einem Teilstromkreis des Bordnetzwerkes zugeordnet und jeder Teilstromkreis ist über den Kontakt eines zugeordneten Relais an eine von der Fahrzeugbatterie gespeiste Stromschiene anschließbar. Die Module 1 dienen zur Aufnahme des zugeordneten Relais und der zugehörigen Beschaltungen, die in Fig. 2 mit strichlierten Linien angedeutet sind. Die Module 1 sind an ihrer Oberseite mit einer Steckbuchse 3 zur Aufnahme eines in der Zeichnung nicht dargestellten Flachsteckers versehen. Zur festen Verbindung mit der gemeinsamen Steckplatte 2 dienen an der Unterseite des Moduls 1 befindliche Stecker 4. Zur Justierung jedes Moduls 1 dient ein an der Unterseite angeordneter Stift 5, der in eine entsprechende Öffnung am Aufbau der Steckplatte 2 eingreift. Den Zugang zu stellbaren Teilen innerhalb des Moduls 1 findet man über eine Montageöffnung 6, die durch je einen Deckel 7 verschließbar ist. Die Speisung des im Modul 1 befindlichen Relais erfolgt über das in die Steckbuchse 3 einzuführende Kabel.

Die Erfindung bietet folgende Vorteile:
Die Hochstromverbindungen können kürzestmöglich auf ein Minimum reduziert werden (weniger Spannungsabfall und Verlustleistung). Durch die Aufteilung auf mehrere Relais können billigere Leiterplattenrelais eingesetzt werden. Durch die Aufteilung auf mehrere Relais können auch einzelne Verbraucher selektiv abgeschaltet werden (z.B. bei Bordnetzüberlastung). Eine zentrale Überwachung für Diagnosezwecke ist durch den Aufbau leicht möglich. Die einzelnen Baugruppen können für den Servicefall austauschbar ausgeführt werden. Durch die verwendete Leiterplattentechnik werden bei Änderungen die Kosten auf ein Minimum reduziert. Die Einheit kann durch Anordnung zusätzlicher Module leicht erweitert werden.

**Patentansprüche**

1. Anordnung von Schaltkreisen mit zugehörigen Gehäusen für Bordnetze von Fahrzeugen, insbesondere Kraftfahrzeugen, mit mehreren Teilstromkreisen, **dadurch gekennzeichnet,** daß jeder Teilstromkreis über den Kontakt je eines zugeordneten Relais unmittelbar an eine von der Fahrzeugbatterie gespeiste Stromschiene anschließbar ist und daß weiters jedem Teilstromkreis ein das betreffende Relais samt Beschaltung enthaltendes, als mit Steckverbindungen (3) versehenes Modul (1) ausgebildetes Gehäuse zugeordnet ist und daß schließlich für alle Module (1) eine als Haltevorrichtung dienende Steckplatte (2) vorgesehen ist, die die der Informationsübertragung zwischen den einzelnen Modulen (1) dienenden Querverbindungsleitungen enthält.

FIG. 1

FIG. 2

FIG. 4

FIG. 3